# EUROPÄISCHE PATENTSCHRIFT

(11) **EP 4 110 728 B1**
(45) Veröffentlichungstag und Bekanntmachung des Hinweises auf die Patenterteilung: **06.08.2025**
(21) Anmeldenummer: 21708959.8
(22) Anmeldetag: 25.02.2021
(51) Int. Cl.: C01B 21/28, B01J 8/02, B01J 8/44, B01J 8/00, B01D 53/86

(54) **REAKTOR FÜR DIE KATALYTISCHE BEHANDLUNG EINES GASSTROMS**
REACTOR FOR THE CATALYTIC TREATMENT OF A GAS STREAM
RÉACTEUR POUR LE TRAITEMENT CATALYTIQUE D'UN FLUX GAZEUX

(30) Priorität: 25.02.2020 DE 102020202387; 25.02.2020 BE 202005120
(43) Veröffentlichungstag der Anmeldung: 04.01.2023
(73) Patentinhaber: thyssenkrupp Uhde GmbH, 44141 Dortmund (DE); thyssenkrupp AG, 45143 Essen (DE)
(72) Erfinder: MINNE, Pascal, 44141 Dortmund (DE); HONECKER, Horst, 44534 Lünen (DE)
(74) Vertreter: thyssenkrupp Intellectual Property GmbH
(86) Internationale Anmeldenummer: PCT/EP2021/054751
(87) Internationale Veröffentlichungsnummer: WO 2021/170756

(56) Entgegenhaltungen:
- WO-A1-02/070120
- WO-A1-2012/065969
- US-A1- 2014 363 359
- US-A1- 2018 243 714

## Beschreibung

Die vorliegende Erfindung betrifft einen Reaktor mit wenigstens einem Katalysatorbett für die katalytische Behandlung eines Gasstroms, insbesondere einen Reaktor für die katalytische Behandlung des Restgases zur Reduzierung des Gehalts an Stickstoffoxiden in Verfahren zur Herstellung von Salpetersäure nach dem Ostwald-Verfahren, wobei das Katalysatorbett sich im Wesentlichen über den Querschnitt des Reaktors erstreckt und das Katalysatorbett von dem zu behandelnden Gas axial durchströmt wird, wobei der Reaktor eine Tragstruktur für das Katalysatorbett aufweist, die mindestens teilweise in dem Reaktor schwimmend gelagert ist, wobei die Tragstruktur ein Siebelement umfasst, sowie radial außenseitig fest mit der Reaktorwandung verbundene Tragelemente unterhalb des Siebelements, wobei das Siebelement eine Auflageebene für das Katalysatorbett schafft und wobei das Siebelement radial außenseitig mit Abstand vor der Reaktorwandung endet.

### Stand der Technik

Die Herstellung von Salpetersäure ist einer der etablierten Prozesse der chemischen Technik, welcher nach Einführung des Haber-Bosch-Verfahrens zur NH₃-Synthese von W. Ostwald auf Basis von Platin-Katalysatoren zur industriellen Reife entwickelt wurde und dessen Konzeption auch heute noch die Basis der modernen HNO₃-Herstellung bildet.

Zur Herstellung von Salpetersäure wird zunächst Ammoniak NH₃ mit Luft reaktiv umgesetzt und Stickoxid NO erzeugt, welches dann zu Stickstoffdioxid NO₂ oxidiert wird.

Anschließend wird das so gewonnene Stickstoffdioxid NO₂ in Wasser absorbiert und es entsteht die Salpetersäure. Damit möglichst viel von dem gewonnenen Stickstoffdioxid NO₂ von Wasser absorbiert wird, geschieht die Absorption in der Regel bei erhöhtem Druck, vorzugsweise bei Drücken zwischen etwa 4 und etwa 14 bar.

Bei der Salpetersäureherstellung wird also Ammoniak mit Luft in Gegenwart von Platinnetzen verbrannt. Dabei werden die Netze von einem Gasgemisch aus typischerweise etwa 9 - 12 Vol.-% NH₃ und Luft durchströmt, wobei sich an den Netzen durch die Exothermie der Oxidationsreaktion eine Temperatur von etwa 800 - 950°C einstellt. Dabei wird NH₃ sehr selektiv zu Stickstoffmonoxid (NO) oxidiert (A, Reaktionsschema I), welches dann im Laufe des weiteren Prozesses zu Stickstoffdioxid (NO₂) oxidiert wird (B, Reaktionsschema II) und schließlich mit Wasser in einer Absorptionsvorrichtung zu HNO₃ umgesetzt wird (C, Reaktionsschema III).
A) Verbrennung von Ammoniak in einem Oxidationsreaktor unter Umsetzung von Ammoniak mit Sauerstoff zu Stickoxid

   4 NH₃ + 5 O₂ → 4 NO + 6 H₂O (I)
B) Oxidation von Stickstoffmonoxid zu Stickstoffdioxid

   2 NO + O₂ → 2 NO₂ (II)

   Die Reaktion läuft im Salpetersäureprozess nach dem Ostwaldverfahren als nicht-katalysierte Gasphasenreaktion ab.
C) Bildung von HNO₃ (Salpetersäure) durch Absorption von NO₂ in Wasser in den Kondensatoren und dem Absorptionsturm unter Rückbildung von NO

   3 NO₂ + H₂O → 2 HNO₃ + NO (III)

Ein typisches Verfahren sowie eine Anlage zur Herstellung von Salpetersäure werden beispielsweise in der WO 2018/137996 A1 beschrieben.

Eine derartige Anlage umfasst einen Ammoniakoxidationsreaktor, dem über eine Leitung Ammoniak zugeführt wird. In diesem Ammoniakoxidationsreaktor wird Ammoniak mit Hilfe von Luftsauerstoff katalytisch zu Stickstoffoxiden (NOx) oxidiert. Die Oxidation des Ammoniaks erfolgt katalytisch bei hohen Temperaturen von beispielsweise etwa 900 °C, wobei das Ammoniak zunächst zu Stickstoffmonoxid (NO) und dann nach Absenkung der Temperatur zu Stickstoffdioxid (NO₂) oxidiert wird. Das im Ammoniakoxidationsreaktor erzeugte NOx-haltige Produktgas wird danach einem Säurekondensator zugeführt, in dem eine Kühlung erfolgt, so dass in dem Produktgasstrom enthaltenes Wasser kondensiert und sich mit dem NOx-Gas ein erster Anteil Säurekondensat bildet, welches einem Absorptionsturm zugeführt, in dem das NOx-Gas in Wasser absorbiert wird und Salpetersäure (HNO₃) erzeugt wird. Das Restgas (so genanntes tail gas) verlässt den Absorptionsturm oben und wird dann einem Restgasreaktor zugeführt, welchem außerdem Ammoniak zugeführt wird, das mit den noch im Restgas enthaltenen Stickstoffoxiden zu Stickstoff und Wasser reagiert, so dass das Restgas von NOx befreit und gereinigt wird.

Verfahren zur Beseitigung von NOx und N₂O aus dem Restgas der Salpetersäureproduktion werden beispielsweise in der EP 1 268 040 B1 beschrieben. Das Verfahren kann beispielsweise zwei aufeinander folgende Stufen umfassen, wobei in der ersten Stufe, die in der Fachwelt auch als DeNOx-Stufe bezeichnet wird, der NOx-Gehalt durch ein katalytisches Reduktionsverfahren reduziert wird und in der zweiten Stufe (auch als DeN₂O-Stufe bezeichnet) der N₂O-Gehalt des Gases reduziert wird. In der ersten Stufe kann die Reduktion der Stickstoffoxide beispielsweise mit Ammoniak nach den folgenden Reaktionsgleichungen erfolgen:

6 NO₂ + 8 NH₃ → 7 N₂ + 12 H₂O (IV)

4 NO + O₂ + 4 NH₃ → 4 N₂ + 6 H₂O (V)

In der zweiten Stufe reagiert das N₂O zunächst mit NO nachfolgender Gleichung:

2 N₂O + NO → 2 N₂ + 2 NO₂ (VI)

2 NO₂ ↔ 2 NO + O₂ (VII)

So dass es sich hier in der Summe um eine katalytische Zersetzung des N₂O zu N₂ und O₂ handelt, gemäß der Gesamtgleichung

2 N₂O → 2 N₂ + O₂ (VIII)

Bei der NOx-Reduzierung in der Behandlung des aus dem Absorptionsturm austretenden Restgases werden bei der Herstellung von Salpetersäure bislang vornehmlich Reaktoren mit radial durchströmten Katalysatorbetten eingesetzt. Diese Reaktoren haben diverse Nachteile: Ein radial durchströmter Reaktor wird mit einem innenliegenden Katalysatorkorb versehen, der in der Regel aus Siebblech und Maschendraht ausgeführt ist. Dieser Korb macht einen teuren und aufwändigen sowie fehleranfälligen Apparate-Hauptflansch notwendig. Weiterhin muss der Korb samt Katalysator durch einen massiven inneren Tragring gehalten werden, was wiederum innenliegende bearbeitete Dichtflächen erforderlich macht. Der Fertigungsaufwand und die Fehleranfälligkeit sind als sehr hoch anzusehen.

Weiterhin tritt bei einem radial durchströmten Katalysatorkorb ein Nachsacken des Katalysatorbettes auf. Um eine Bypassierung des Gasstroms oberhalb des Katalysatorbettes zu vermeiden, muss stets eine Nachrutschreserve des kostspieligen Katalysators eingeplant werden, die beispielsweise bis zu 25 % des gesamten Katalysatorvolumens ausmachen kann und an der eigentlichen katalytischen Reaktion nicht teilnimmt.

Weiterhin erfüllt der herausnehmbare Katalysatorkorb die ihm zugedachte Aufgabe, nämlich einen einfachen Wechsel des Katalysators zu ermöglichen, nur unzureichend. Der Korb kann bedingt durch sein Design nicht ausgekippt werden, da dieser nur aus dünnem Lochblech besteht. Zum Wechseln muss der Katalysator somit trotzdem aus dem Korb abgesaugt werden.

Aus der DE 102 26 461 A1 ist ein Verfahren zur Herstellung von Salpetersäure bekannt, bei dem das Abgas der Salpetersäureherstellung zur Verringerung des Gehalts an Stickstoffoxiden (NO, NO₂ und N₂O) über zwei aufeinanderfolgende Katalysatorbetten geleitet wird, wobei eines oder beide Katalysatorbetten von dem zu reinigenden Abgas radial durchströmt werden. Bei dieser bekannten Vorrichtung erstrecken sich die Katalysatorbetten nicht über den gesamten Querschnitt des Behälters, sondern es verbleibt außen ein Ringspalt zwischen dem Katalysatorbett und der Behälterwandung, so dass das zu reinigende Gas in diesen Ringspalt eintritt und von dort aus radial nach innen hin durch ein erstes Katalysatorbett strömt, dann in einen radial inneren Ringspalt gelangt, durch den es axial strömt und durchströmt danach ein zweites Katalysatorbett wiederum in radialer Richtung von innen nach außen. Diese Art der Durchströmung eines Katalysatorbetts wird in der vorliegenden Anmeldung als in Bezug auf den Reaktor radiale Durchströmung des Katalysatorbetts bezeichnet.

Durchtritt hingegen das zu reinigende Gas ein sich im Wesentlichen über den gesamten Querschnitt des Reaktors erstreckendes Katalysatorbett in axialer oder achsparalleler Richtung, wird in der vorliegenden Anmeldung von axialer Durchströmung des Katalysatorbetts gesprochen. Letztere Art der Durchströmung des Katalysatorbetts kann sich jedoch sowohl auf stehende als auch auf liegende Behälter beziehen. Im letztgenannten Fall kann sich das Katalysatorbett auch über die gesamte Längserstreckung des Behälters erstrecken, wobei dieser größere Abmessungen in der Längsrichtung als in der Höhe aufweisen kann, so dass bei einem liegenden zylindrischen Behälter die Strömungsrichtung bezogen auf den Reaktorbehälter quer zu dessen Achse erfolgt. Gleichwohl handelt es sich hier auch um eine axiale Durchströmung des Katalysatorbetts im Sinne der vorliegenden Anmeldung, auch wenn der liegende zylindrische Behälter selbst in diesem Fall radial durchströmt wird.

Aus US 2018/0243714 A1 ist ein katalytischer Reaktor bekannt, welcher ein stehender mehrstufiger Kontaktturm zur Umwandlung von Schwefeldioxid in Schwefeltrioxid für die Herstellung von Schwefelsäure sein kann. Dieser weist mindestens eine Reaktorstufe auf, in welchem sich quer zur Reaktormittelachse zwischen einem Gasverteilraum und einem Gassammelraum ein Katalysatorbett erstreckt, wobei die Katalysatorbetten benachbarter Reaktorstufen über Stützen miteinander verbunden sein können.

Aus der WO 2012/065969 A1 ist ein chemischer Reaktor mit Drahtgestrick-Maschenware als Halteeinrichtung für Partikel eines Katalysatorbettes mit den eingangs genannten Merkmalen bekannt, wobei der chemische Reaktor zur heterogen katalysierten Umsetzung eines Fluids dient und wobei das Katalysatorbett bezogen auf den Reaktor in axialer Richtung durchströmt wird. Auf der Innenseite der Reaktorwand ist umlaufend ein Tragring ausgebildet. Auf diesem Tragring befindet sich schwimmend gelagert ein als Spaltsieb ausgebildeter Träger, auf dem sich wiederum eine Drahtgestrick-Maschenware befindet, die die Katalysatorpartikel aufnimmt. Bei der heterogen katalysierten Reaktion handelt es sich hier um eine adiabate Hydrierung von Nitrobenzol zu Anilin.

Die EP 0 771 234 B1 beschreibt einen Reaktor für exotherme heterogen katalytische Synthesereaktionen, insbesondere für die Herstellung von Ammoniak oder Methanol, bei dem das Katalysatorbett im Wesentlichen den gesamten Querschnitt des Reaktors ausfüllt und von den Reaktionsgasen in axialer Richtung bezogen auf den Behälter durchströmt wird. Der Reaktor umfasst eine Bodenplatte, welche radial innenseitig auf einem Träger schwimmend gelagert ist und welche außenseitig auf einem ringförmigen Träger gelagert ist und sich dort bis nahe an die Wandung des Reaktors erstreckt. Die Bodenplatte trägt das Katalysatorbett. Die schwimmende Lagerung an einer Seite dient dazu, Spannungen durch wärmebedingte Ausdehnung zu vermeiden.

### Beschreibung der vorliegenden Erfindung

Die Aufgabe der vorliegenden Erfindung besteht darin, einen Reaktor mit wenigstens einem Katalysatorbett für die katalytische Behandlung eines Gasstroms, insbesondere für die Restgasbehandlung bei der Herstellung von Salpetersäure mit den eingangs genannten Merkmalen zur Verfügung zu stellen, bei dem das Katalysatorbett axial durchströmt wird und eine konstruktiv verbesserte schwimmende Lagerung für das Katalysatorbett vorgesehen ist.

Die Lösung der vorgenannten Aufgabe liefert ein Reaktor mit wenigstens einem Katalysatorbett der eingangs genannten Art mit den Merkmalen des Anspruchs 1.

Erfindungsgemäß ist vorgesehen, dass die Tragstruktur neben fest mit der Reaktorwandung verbundenen Tragelementen Stützelemente für das wenigstens eine Siebelement umfasst, welche im Reaktor ebenfalls schwimmend gelagert sind. Die erfindungsgemäße Lösung sieht somit vor, dass nicht nur das (flächige) Siebelement, sondern auch die Stützelemente, auf denen das Siebelement bereichsweise aufliegt, schwimmend gelagert sind.

Vorteilhaft an der erfindungsgemäßen Lösung ist insbesondere, dass im Vergleich mit der herkömmlichen Konstruktion mit stehendem Reaktorbehälter und radial durchströmtem Katalysatorbett der kostspielige Haupt-Apparate-Flansch entfallen kann. Weiterhin kann der aufwändige und kostenintensive Reaktorkorb wegfallen. Dadurch verringern sich die Kosten der Vorrichtung und die Lieferzeiten. Auch die Menge des benötigten Katalysators lässt sich reduzieren, da keine Nachrutschreserve mehr benötigt wird. Der verbrauchte Katalysator lässt sich einfacher austauschen, beispielsweise durch Absaugen, wobei ein Zugang zum Inneren des Behälters und somit zum Katalysator beispielsweise über Mannlöcher erfolgen kann. Somit entfällt die bisherige aufwändige Demontage der Reaktorhaube, und die Entnahme des Reaktorkorbes ist nicht mehr notwendig. Die Serviceleistung beim Austausch des Katalysators wird folglich erheblich vereinfacht. Die Größe der Vorrichtung kann nahezu beliebig an die jeweils benötigte Katalysatorschüttung angepasst werden. Die Herstellung der Vorrichtung kann in kürzerer Zeit und zu geringeren Kosten erfolgen und die Wartung der Anlage wird vereinfacht.

Nachfolgend sollen einige hierin verwendete Begriffe zum besseren Verständnis der vorliegenden Beschreibung der Erfindung noch einmal erläutert werden.

Der Ausdruck "Stickstoffoxide" wird in der Technik zusammenfassend für die bei der Oxidationsreaktion von Ammoniak entstehenden Oxide der verschiedenen Oxidationsstufen verwendet, nämlich Stickstoffmonoxid (NO), Stickstoffdioxid (NO₂), Distickstofftetroxid (N₂O₄) und Distickstoffmonoxid (N₂O), wobei bei der Reaktion hauptsächlich NO und NO₂ entstehen. Diese verschiedenen Stickstoffoxide werden in ihrer Gesamtheit auch mit NOx bezeichnet. Bei dem Schritt der Absorption der Stickstoffoxide in Wasser, welcher in dem Absorptionsturm einer Salpetersäureanlage abläuft, wird gemäß der obigen Gleichung C) Stickstoffdioxid (NO₂), in dem der Stickstoff die Oxidationsstufe 4 aufweist, weiter zu Salpetersäure (HNO₃) oxidiert, in der Stickstoff in der Oxidationsstufe 5 vorliegt.

Diese Reaktion der Absorption von Stickstoffdioxid in Wasser erfolgt in einem Absorptionsturm, wobei es sich hier um eine Absorptionskolonne handelt, die mehrere Siebböden aufweist und einen Kolonnensumpf in ihrem unteren Bereich hat. Als "Restgas" wird dasjenige Gas bezeichnet, welches bei der Absorption nicht zu flüssiger Salpetersäure umgesetzt wird, sondern den Absorptionsturm gasförmig verlässt. Dieses Restgas wird in der Restgasreinigung in der Regel durch Umsetzung mit Ammoniak katalytisch zu Stickstoff reduziert, um den Gehalt des Restgases an Stickstoffoxiden (NOx sowie N₂O) zu verringern. Dieses Restgas wird im angloamerikanischen Sprachraum auch als "tailgas" bezeichnet.

Der erfindungsgemäße Reaktor wird insbesondere für die Behandlung des Restgases verwendet, welches bei der Salpetersäureherstellung den Absorptionsturm verlässt.

Unter dem hierin verwendeten Begriff "Siebelement" wird ein flächiges plattenförmiges Gebilde verstanden, welches perforiert ist und somit einen Gasdurchlass ermöglicht. Beispielsweise handelt es sich um ein Siebblech, welches sich bevorzugt sowohl in Längsrichtung als auch in Querrichtung durch den gesamten Restgasreaktor unterhalb des Katalysatorbettes erstreckt und somit als Auflager für das Katalysatorbett dient. Das Siebelement kann über seine Fläche durchgehend ausgebildet sein oder gegebenenfalls aus mehreren kleineren Siebelementen zusammengesetzt sein. Da somit im Prinzip auch mehrere Siebelemente verwendet werden können, die sich zu der Gesamtfläche des Siebelements ergänzen, wird in der vorliegenden Anmeldung auch von wenigstens einem Siebelement gesprochen.

Als "Tragstruktur" wird hierin die Gesamtheit der Bauteile bezeichnet, die der Schaffung eines Auflagers für das Katalysatorbett dienen. Diese Tragstruktur umfasst das Siebelement, die Stützelemente, auf denen das Siebelement aufliegt, die Konsolen, auf denen wiederum diese Stützelemente aufliegen sowie gegebenenfalls weitere Tragelemente an der Wandung des Reaktorbehälters, auf denen das Siebelement in seinem Randbereich aufliegt.

Die vorliegende Erfindung umfasst sowohl Reaktoren, welche als liegende Reaktoren ausgebildet ist, bei denen der Gasstrom, insbesondere das Restgas das Katalysatorbett im Wesentlichen senkrecht oder quer zur Behälterachse durchströmt oder die als stehende Reaktoren ausgebildet sind, bei denen der Gasstrom, insbesondere das Restgas das Katalysatorbett im Wesentlichen in Achsrichtung oder parallel zur Behälterachse durchströmt. Bei einem liegenden Reaktor handelt es sich vorzugsweise um einen etwa zylindrischen Behälter, dessen Achse etwa horizontal verläuft, wobei die Erstreckung des Behälters in dieser Achsrichtung auch als Längsrichtung bezeichnet wird, während die Erstreckung des Behälters quer zu seiner Längsachse, das heißt die in Bezug auf seine Längsachse radiale Erstreckung auch als Querrichtung bezeichnet wird. In einem liegenden Reaktorbehälter erstreckt sich das Katalysatorbett im Wesentlichen horizontal als Schicht über vorzugsweise den gesamten Querschnitt des Behälters und wird von dem zu reinigenden Gasstrom axial durchströmt, das heißt von oben nach unten oder gegebenenfalls in umgekehrter Richtung von unten nach oben.

Sofern bei dem erfindungsgemäßen Reaktor überhaupt ein Nachsacken des Katalysators auftritt, ist dies unproblematisch, da aufgrund der axialen Durchströmung kein Bypassing auftritt, da das Prozessgas nicht seitlich an dem Katalysatorbett vorbeiströmen kann.

Das Befüllen bzw. Entleeren des Katalysators, insbesondere durch Absaugen, kann beispielsweise über diverse Mannlöcher und Füllstutzen realisiert werden, wobei denen Anzahl und Positionierung von der Größe und Geometrie des Reaktorbehälters im konkreten Anwendungsfall abhängen. Ein separater Katalysatorkorb ist nicht mehr erforderlich, wodurch die Notwendigkeit eines teuren und aufwändigen Apparate-Hauptflansches entfällt.

Bislang hat man axial durchströmte Katalysatorbetten in diesem Bereich aufgrund thermischer Spannungsprobleme wenig eingesetzt. Das horizontal angeordnete Katalysatorbett muss im Reaktorbehälter entsprechend unterstützt werden. Um ein Bypassing zwischen der Behälterwandung und dem Katalysatorbett zu verhindern, musste die Konstruktion bisher fest mit dem Behältermantel verschweißt werden. Die üblicherweise im Betrieb auftretenden Temperaturen führen damit wiederum zu hohen thermischen Spannungen und dadurch zu Beschädigungen am Katalysatorbett bzw. dessen Unterstützungen (der Tragstruktur). Dies wird durch die erfindungsgemäße verbesserte schwimmende Lagerung verhindert.

Gemäß einer bevorzugten Weiterentwicklung der Erfindung umfassen die fest mit der Reaktorwandung verbundenen Tragelemente Konsolen, auf denen die Stützelemente verschieblich aufliegen, wobei auf den verschieblichen Stützelementen wiederum das wenigstens eine Siebelement aufliegt. Unter Konsolen werden hierin Tragelemente verstanden, die so geformt sind, dass sie sich einerseits entlang der gegebenenfalls gekrümmten Reaktorwandung erstrecken, mit der sie verbunden sind und andererseits eine oberseitige bevorzugt horizontale Auflageebene umfassen, auf der die Stützelemente aufliegen können. In der Seitenansicht können solche Konsolen beispielsweise einen etwa dreieckigen Umriss aufweisen, wobei eine Seite des Dreiecks, die entlang der Reaktorwandung verläuft, eine konvexe Krümmung aufweist. Die Auflagekräfte aus der Gewichtskraft des Siebelements und des Katalysatorbetts werden auf diese Weise günstig in die Reaktorwandung eingeleitet und ein Hebelmoment wird vermieden.

Vorzugsweise weist der Reaktor mehrere in Längsrichtung oder in Umfangsrichtung des Reaktors gesehen jeweils voneinander beabstandete Konsolen auf, auf denen jeweils Stützelemente verschieblich aufliegen, wobei ein oder mehrere Siebelemente auf einem oder mehreren Stützelementen aufliegen. Derartige Konsolen können sowohl entlang der Längsseite als auch entlang der Querseite der Wandung des Reaktorbehälters angeordnet sein.

Gemäß einer bevorzugten Weiterbildung der Erfindung liegen die Stützelemente auf den Konsolen mit zwei Freiheitsgraden der Bewegung in zwei zueinander etwa senkrecht ausgerichteten Richtungen verschieblich auf. Bei dieser Variante besteht der Vorteil, dass sowohl Ausdehnungen der Stützelemente in Längsrichtung des Reaktorbehälters als auch solche in Querrichtung (quer zur Längsrichtung) des Reaktorbehälters möglich sind, ohne dass es zu Spannungen kommt.

Gemäß einer möglichen bevorzugten konstruktiven Variante des erfindungsgemäßen Reaktors sind die Konsolen in ihrer Querrichtung breiter ausgebildet als die Stützelemente. Dadurch können sich die Stützelemente auf den Konsolen in Querrichtung verschieben, ohne dass Spannungen in den Bauteilen auftreten.

Um zu verhindern, dass bei einer solchen Verschiebung der Stützelemente in Querrichtung der Konsolen die Stützelemente von den Konsolen rutschen, sind gemäß einer bevorzugten Weiterbildung der Erfindung an den Konsolen Wangen so angebracht, dass sie die verschiebliche Bewegung der Stützelemente relativ zu den Konsolen in Querrichtung der Konsolen begrenzen.

Die Stützelemente enden bevorzugt mit Abstand vor der Reaktorwandung, so dass hier ein Spalt verbleibt und keine Spannungen entstehen, wenn die Stützelemente sich in ihrer Längsrichtung-also in Richtung auf die Reaktorwandung zu-ausdehnen.

Gemäß einer bevorzugten Weiterbildung der Erfindung sind jeweils zwei voneinander beabstandete parallele Wangen beidseitig an den Konsolen angebracht, wobei die beiden Wangen über ein sich in Querrichtung erstreckendes Abstandselement miteinander verbunden sind. Bei dieser bevorzugten konstruktiven Variante sind somit die Wangen nicht nur mit den Konsolen fest verbunden, sondern auch untereinander verbunden. Sofern sich die Stützelemente auf den Konsolen in Querrichtung verschieben und dadurch Kräfte in dieser Richtung auf die Wangen einwirken und diese auf Biegung beanspruchen, werden die Wangen durch die Verbindung untereinander stabilisiert. Das sich in Querrichtung erstreckende Abstandselement sorgt für eine gewisse Führung der Stützelemente bei deren Verschiebung in Querrichtung.

Bei der vorgenannten konstruktiven Variante weist der Reaktor vorzugsweise als Abstandselement eine kraftschlüssig mit den Wangen verbundene Hülse auf, die diese untereinander verbindet und die sich in Querrichtung (also etwa senkrecht) zur Ebene der beiden zueinander parallelen Wangen erstreckt. Die Verbindung zwischen der Hülse und den beiden Wangen kann beispielsweise eine Schraubverbindung sein.

Da bei der schwimmenden Lagerung der Stützelemente vorgesehen ist, dass sich diese auf den Konsolen auch in Längsrichtung bewegen können (aufgrund der thermischen Ausdehnung) müssen die Stützelemente einen Schlitz oder ein Langloch aufweisen, wenn sich die als Abstandselement zwischen den Wangen verlaufende Hülse in Querrichtung zu dem Stützelement erstreckt, so dass sich die Hülse dann durch den Schlitz hindurch erstreckt und für das Stützelement der Bewegungsfreiheitsgrad in Längsrichtung gegeben ist.

Eine bevorzugte Weiterbildung der vorliegenden Erfindung sieht vor, dass die Tragstruktur zusätzlich zu den Konsolen wenigstens ein an der Reaktorwandung umlaufend angeordnetes und mit dieser verbundenes weiteres Tragelement umfasst, auf dem das wenigstens eine Siebelement mit Abstand zur Reaktorwandung schwimmend aufliegt, so dass ein Randspalt zwischen Siebelement und Reaktorwandung verbleibt. Bei dieser möglichen konstruktiven Variante liegt das Siebelement somit verschieblich auf in der Regel mehreren der oben beschriebenen Stützelemente auf, die zueinander in Längsrichtung des Reaktorbehälters beabstandet sind. Diese Stützelemente enden jeweils mit Abstand vor der Reaktorwandung. Der äußere Bereich des Siebelements liegt dann jenseits dieser Stützelemente im wandnahen Bereich wiederum schwimmend auf einem weiteren Tragelement auf, welches an der Wandung des Reaktorbehälters umlaufend angeordnet sein kann und welches seinerseits fest mit der Reaktorwandung verbunden ist. Durch die auch hier schwimmende Lagerung kann sich das Siebelement auch gegenüber diesem weiteren Tragelement verschieben. Das umlaufende Tragelement verhindert das Bypassing des Gasstroms.

Gemäß einer bevorzugten Weiterbildung der vorliegenden Erfindung weist der Reaktor wenigstens ein umlaufendes Deckblech auf, welches einen Randspalt zwischen dem Siebelement und der Reaktorwandung überdeckt und verhindert, dass die Katalysatorschüttung in den Spalt zwischen Siebelement und Behälterwandung rieselt. Das Deckblech kann auch als Winkelprofil ausgebildet sein oder als schräg an der Behälterwandung angebrachter Flachstahl.

Bei der vorgenannten konstruktiven Variante wird im Prinzip der der Reaktorwandung zugewandte randseitige Bereich des Siebelements zwischen dem umlaufenden weiteren Tragelement, auf dem das Siebelement, insbesondere Siebblech aufliegt und dem Deckblech, das auf dem Siebblech aufliegt, eingefasst. In der Regel liegt das Katalysatorbett nicht unmittelbar auf dem Siebblech, sondern auf das Siebblech ist zunächst noch ein Drahtgeflecht aufgelegt, auf dem dann wiederum das Katalysatorbett aufliegt.

Gemäß einer bevorzugten Variante der Erfindung ist der Reaktor als liegender Reaktor ausgebildet, bei dem der Gasstrom, insbesondere das Restgas das Katalysatorbett im Wesentlichen senkrecht oder quer zur Behälterachse durchströmt. Alternativ kann aber der Reaktor auch als stehender Reaktor ausgebildet sein, bei dem der Gasstrom, insbesondere das Restgas das Katalysatorbett im Wesentlichen in Achsrichtung oder parallel zur Behälterachse durchströmt. Bei beiden Varianten liegt eine axiale Durchströmung des Katalysatorbetts vor. Bei der ersten Variante liegt ein liegendes Katalysatorbett in einem liegenden Reaktorbehälter vor und der zu behandelnde Gasstrom durchströmt den liegenden Reaktorbehälter quer zur Behälterachse, zumeist von oben nach unten. Bei der zweiten Variante liegt ebenfalls ein liegendes Katalysatorbett vor, in einem stehenden Reaktorbehälter und der zu behandelnde Gasstrom durchströmt den Behälter in Richtung der Behälterachse ebenfalls zumeist von oben nach unten.

Bei radial durchströmten Katalysatorbetten, die nicht von der vorliegenden Erfindung erfasst sind, handelt es sich beispielsweise um ein stehendes Katalysatorbett in einem stehenden Behälter, in den das zu behandelnde Gas beispielsweise von oben her zunächst in Achsrichtung eintritt, dann aber umgelenkt wird und das stehende Katalysatorbett dann in radialer Richtung, beispielsweise von außen nach innen hin durchströmt. Für eine solche Bauart mit radial durchströmtem Katalysatorbett benötigt man einen Katalysatorkorb, der den Katalysator einfasst.

Gemäß einer optionalen Variante der Erfindung verwendet man zur weiteren Aussteifung der Tragstruktur oberhalb oder gegebenenfalls alternativ auch unterhalb des Siebelements in dem Katalysatorbett etwa vertikal ausgerichtete, sich entlang des Siebelements erstreckende, zueinander beabstandete, vertikale Aussteifungsrippen. Diese Aussteifungsrippen können sich beispielsweise in der Längsrichtung des Reaktorbehälters erstrecken.

Bei einer weiteren Ausgestaltung der Erfindung weist der Reaktor mindestens ein erstes Katalysatorbett und ein zweites Katalysatorbett auf. Die Katalysatorbetten sind voneinander beabstandet, wobei mindestens ein Teil des Gasstroms über einen ersten Einlass zum ersten Katalysatorbett strömt und wobei mindestens ein Teil des Gasstroms über einen zweiten Einlass zum zweiten Katalysatorbett strömt. Auf diese Weise kann ein möglicherweise erhöhter Platzbedarf durch eine vertikale Ausgestaltung des Reaktors mit mehreren schwimmenden, axial durchströmten Katalysatorbetten optimal genutzt werden.

Bei einer weiteren bevorzugten Ausgestaltung des erfindungsgemäßen Reaktors ist vorgesehen, dass der erste Einlass und der zweite Einlass über eine Einlasssammelleitung strömungstechnisch miteinander verbunden sind.

Vorteilhafterweise ist bei einer weiteren Ausgestaltung des erfindungsgemäßen Reaktors vorgesehen, dass mindestens ein Teil des Gasstroms über einen ersten Auslass im Bereich des ersten Katalysatorbettes aus dem Reaktor ausleitbar ist und dass mindestens ein Teil des Gasstroms über einen zweiten Auslass im Bereich des zweiten Katalysatorbettes aus dem Reaktor ausleitbar ist.

Zusätzlich kann bei einer weiteren Ausgestaltung vorgesehen sein, dass der erste Auslass und der zweite Auslass über eine Auslasssammelleitung strömungstechnisch miteinander verbunden sind.

Um eine Bypassströmung zu vermeiden, ist bei einer weiteren bevorzugten Ausgestaltung vorgesehen, dass das erste Katalysatorbett und das zweite Katalysatorbett durch ein Trennelement strömungstechnisch voneinander getrennt sind. Das Trennelement, beispielsweise ein Trennblech, verhindert, dass die Gasströmung vom ersten Katalysatorbett zum zweiten Katalysatorbett strömen kann. Somit sind mindestens zwei parallele Strömungspfade innerhalb des Reaktors vorgesehen. Der erste Strömungspfad erstreckt sich vom ersten Einlass durch das erste Katalysatorbett zum ersten Auslass. Der zweite Strömungspfad erstreckt sich vom zweiten Einlass durch das zweite Katalysatorbett zum zweiten Auslass.

Nachfolgend wird die vorliegende Erfindung anhand von Ausführungsbeispielen unter Bezugnahme auf die beiliegenden Zeichnungen näher beschrieben. Dabei zeigen:
Figur 1 einen schematisch vereinfachten Längsschnitt durch einen erfindungsgemäßen Restgasreaktor einer Anlage zur Herstellung von Salpetersäure gemäß einem Ausführungsbeispiel der vorliegenden Erfindung;
Figur 2 einen schematisch vereinfachten Querschnitt durch den Restgasreaktor nach dem Ausführungsbeispiel von Figur 1;
Figur 3 eine vergrößerte Detailansicht, die einen Teil eines Querschnitts durch den Restgasreaktor zeigt, wobei die schwimmende Lagerung des Siebblechs dargestellt ist;
Figur 4 eine vergrößerte Detailansicht, die einen vertikalen Schnitt durch die Ansicht von Figur 3 entlang der Linie A-A zeigt;
Figur 5 eine schematische Darstellung eines Ausführungsbeispiels eines Reaktors mit zwei Katalysatorbetten.

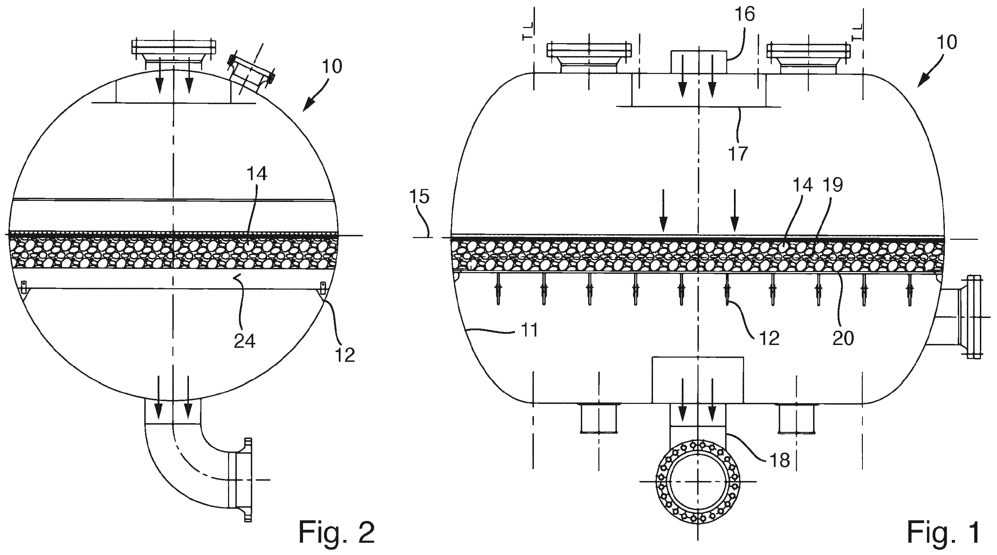

Nachfolgend wird zunächst auf die Figur 1 Bezug genommen und anhand dieser Darstellung wird eine erste beispielhafte Ausführungsvariante der Erfindung näher erläutert. Die Darstellung des Reaktors in Figur 1 ist schematisch vereinfacht und es sind nur diejenigen Anlagenkomponenten dargestellt, die im Rahmen der vorliegenden Erfindung von Bedeutung sind. In Figur 1 ist eine mögliche alternative Variante des erfindungsgemäßen Reaktors dargestellt, bei der es sich um einen liegenden Reaktor handelt. Dies bedeutet, die Achse 15 des Reaktorbehälters 10 verläuft im Wesentlichen horizontal und das Katalysatorbett 14 erstreckt sich im Prinzip in Richtung dieser Achse oder parallel zu dieser. In Figur 1 ist das Katalysatorbett 14 dargestellt, welches sich in Längsrichtung (Achsrichtung) des Reaktorbehälters 10 in der Regel über seine gesamte Länge erstreckt. Da die zu reinigenden Gase oben über den ersten Einlass 16 in den Behälter einströmen und diesen quer zu seiner Achse 15 durchströmen, wird das Katalysatorbett 14 axial in Pfeilrichtung von den Gasen durchströmt. Im oberen Bereich des Reaktorinnenraums treffen die Gase auf eine Ablenkplatte 17, so dass sie sich gleichmäßiger über den Behälterquerschnitt verteilen. Danach strömen die Gase axial in Pfeilrichtung durch das Katalysatorbett und verlassen dann den Behälter über den ersten Auslass 18.

In Längsrichtung erstrecken sich im Reaktorbehälter 10 oberhalb eines Siebblechs 20, auf dem das Katalysatorbett 14 aufliegt, Aussteifungsrippen 19, die in der Darstellung gemäß Figur 1 im Katalysatorbett liegen.

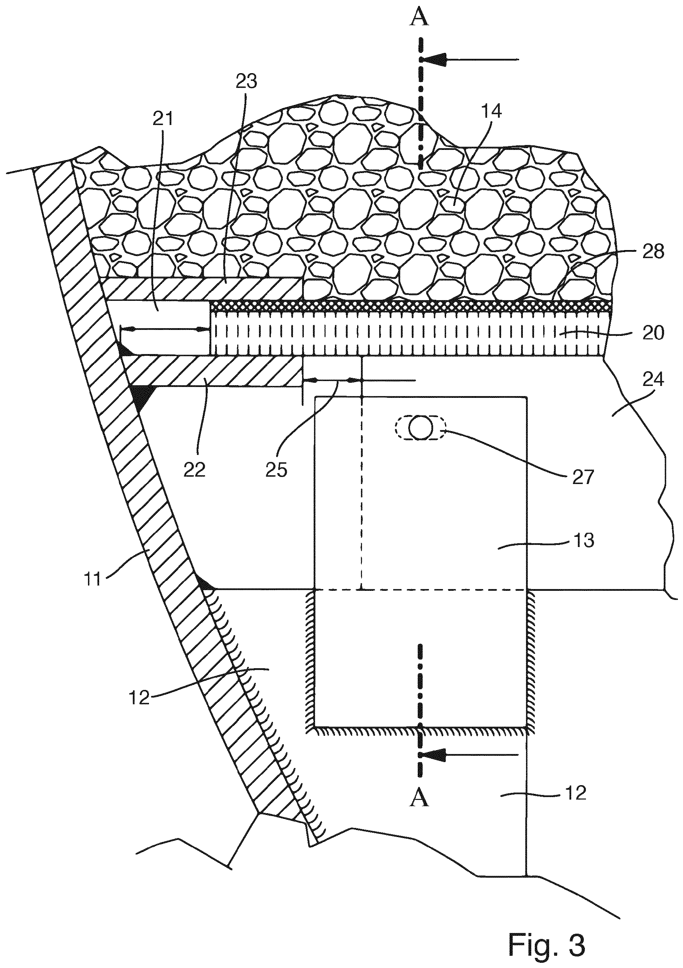

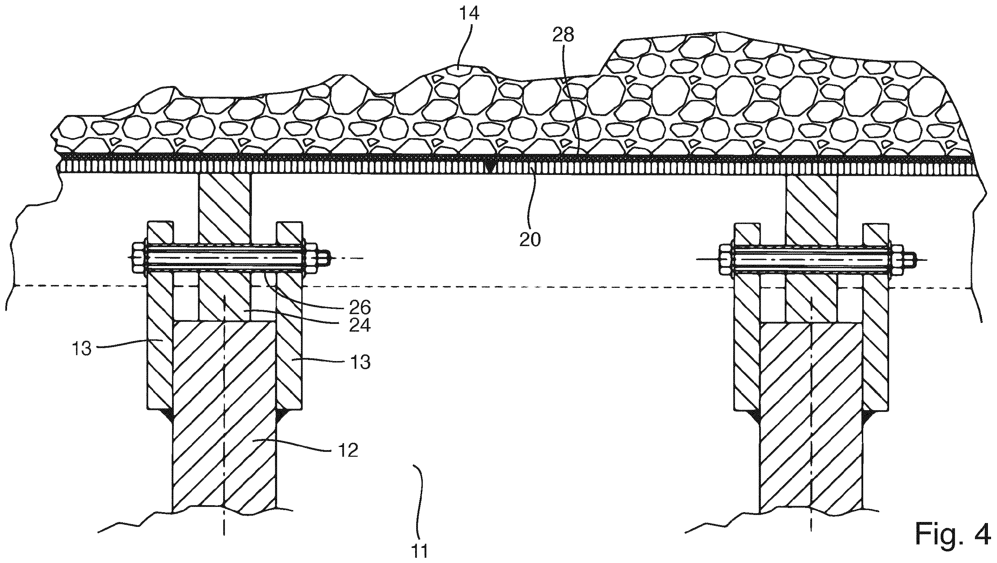

Figur 2 zeigt einen schematisch vereinfachten Querschnitt durch den Reaktorbehälter 10 von Figur 1, aus dem erkennbar ist, dass der Reaktorbehälter 10 eine etwa zylindrische Form hat und dass sich das Katalysatorbett 14 auch in Querrichtung des Reaktorbehälters 10 gesehen über dessen gesamten Querschnitt erstreckt, so dass die zu reinigenden Gase das Katalysatorbett durchströmen müssen. Nähere Einzelheiten der Tragstruktur für die Auflage des Siebblechs, auf dem wiederum das Katalysatorbett aufliegt, ergeben sich aus den Detaildarstellungen gemäß den Figuren 3 und 4, auf die nachfolgend Bezug genommen wird.

Figur 3 zeigt einen Ausschnitt aus einer Querschnittsdarstellung des Reaktorbehälters, ähnlich wie in Figur 2, jedoch in vergrößertem Maßstab. In dieser Ansicht sind Teile der Tragstruktur für die schwimmende Lagerung des Siebblechs 20 im Reaktorbehälter 10 dargestellt. Dieses Siebblech 20, auf dem das Katalysatorbett 14 aufliegt, endet mit etwas Abstand zur Reaktorwandung 11, so dass ein Randspalt 21 zwischen dem äußeren Rand des Siebblechs 20 und der Reaktorwandung 11 verbleibt, wobei das Siebblech 20 in seinem äußeren Randbereich auf einem an der Reaktorwandung umlaufend angeordneten und mit dieser verbundenen, beispielsweise verschweißten Tragelement 22 mit Abstand zur Reaktorwandung schwimmend aufliegt. Dadurch ist es möglich, dass das Siebblech sich bei Wärmeausdehnung weiter in den Spalt 21 hinein verschiebt, ohne dass es zu Materialspannungen kommt. Weiterhin ist wenigstens ein umlaufendes Deckblech 23 vorgesehen, welches den Randspalt 21 zwischen dem Siebblech 20 und der Reaktorwandung 11 überdeckt, so dass verhindert wird, dass die Katalysatorschüttung in den Spalt zwischen Siebelement und Behälterwandung rieselt. Somit ist der randseitige Bereich des Siebblechs 20 sandwichartig zwischen dem umlaufenden Tragelement 22 und dem Deckblech 23 eingefasst. Bei dem umlaufenden Tragelement 22 kann es sich beispielsweise um ein Flacheisen oder dergleichen handeln.

Die Tragstruktur für das Siebblech 20 umfasst weiterhin Stützelemente 24, auf denen das Siebblech 20 mit seiner Unterseite aufliegt, wobei diese Stützelemente 24 ebenfalls schwimmend gelagert sind und mit Abstand vor dem umlaufenden Tragelement 22 enden, wie durch den Doppelpfeil 25 in Figur 3 angedeutet ist. Dadurch besteht die Möglichkeit, dass sich die Stützelemente 24 bei Wärmeausdehnung in Richtung des Doppelpfeils 25, das heißt in Querrichtung im Reaktorbehälter 10 bewegen. Die Tragstruktur für das Siebblech 20 umfasst weiterhin Konsolen 12, die fest mit der Wandung 11 des Reaktorbehälters 10 verbunden sind, beispielsweise durch verschweißen und auf denen die Stützelemente 24 wiederum schwimmend gelagert sind. Für eine Begrenzung der Querverschiebung der Stützelemente 24 dienen Wangen 13, die einen Schlitz 27 oder ein Langloch aufweisen, durch das sich in Querrichtung zu den Wangen 13 eine Hülse 26 erstreckt (siehe Figur 4).

Weitere Details betreffend die schwimmende Lagerung der Stützelemente 24 sind aus der Darstellung gemäß Figur 4 ersichtlich, welche eine Ansicht in Richtung des Pfeils A von Figur 3 zeigt und somit einen Detailausschnitt in Längsrichtung des Reaktorbehälters 10 gesehen und auf die nachfolgend Bezug genommen wird. In Figur 4 sind zwei der Konsolen 12 der Tragstruktur erkennbar, die jeweils beidseitig von zwei Wangen 13 eingefasst werden, welche wiederum mit den Konsolen 12 fest verbunden sind. Diese Wangen 13 erstrecken sich parallel zu den Konsolen 12 und sind mit den Konsolen beispielsweise durch eine Schweißverbindung fest verbunden. Die Wangen 13 sind an beiden Seiten jeweils seitlich flankierend zu den Konsolen 12 angeordnet und überragen diese nach oben hin. Die Konsolen 12 erstrecken sich radial nach außen hin bis zur Wandung 11 des Reaktorbehälters und sind mit dieser fest verbunden, wie Figur 3 zeigt. Aus Figur 4 ist erkennbar, dass die Konsolen 12, auf denen die Stützelemente 24 schwimmend gelagert aufliegen, breiter sind als die Stützelemente 24 selbst. Die Hülsen 26 erstrecken sich quer zu den Stützelementen 24, erstrecken sich durch die Stützelemente 24 und die beiden Wangen 13 hindurch und sind beispielsweise über eine Schraubverbindung an den Wangen 13 festgelegt. Dadurch, dass die Stützelemente 24, die auf den Konsolen 12 ruhen, schmaler sind als die Konsolen, können sie sich geführt durch die Hülsen 26 auch gegenüber den Konsolen in Querrichtung bewegen, so dass sich eine schwimmende Lagerung der Stützelemente 24 in Richtung zweier Bewegungsfreiheitsgrade ergibt, nämlich in Querrichtung und in Längsrichtung auf die Reaktorwandung zu (siehe Doppelpfeil 25 in Figur 3). Durch die Wangen 13 wird dabei verhindert, dass die Stützelemente 24 bei zu starker Bewegung in Querrichtung von den Konsolen 12, auf denen sie aufliegen, rutschen.

Das Siebblech 20 liegt wiederum auf der Oberseite der Stützelemente 24 auf, jeweils die Distanz zwischen zwei benachbarten Stützelementen 24 überbrückend, wie aus Figur 4 ersichtlich ist. Das Siebblech 20 liegt auf den Stützelementen lose auf und ist somit ebenfalls schwimmend gelagert. An seinem äußeren Ende, in Querrichtung des Reaktorbehälters gesehen (siehe Figur 3) ist das Siebblech 20 zwischen dem umlaufenden Tragelement 22 und dem Deckblech 23 eingefasst und schwimmend gelagert. In Längsrichtung des Reaktorbehälters 10 gesehen, endet das Siebblech 20 ebenfalls vor der Wandung des Reaktorbehälters, so dass auch hier Bewegungsspielraum bei Wärmeausdehnung des Siebblechs 20 gegeben ist. Auf dem Siebblech 20 liegt zunächst ein Drahtgewebe 28 auf (siehe Figuren 3 und 4), auf dem dann wiederum das Katalysatorbett 14 gelagert ist.

Auf der Katalysatorschüttung 14 kann eine Schüttung aus Keramik-Kugeln aufgebracht werden, die dazu dienen soll, ein mögliches ungleichmäßiges Absacken der Katalysatorschüttung auszugleichen und ein Aufwirbeln des Katalysators durch den Gasstrom zu verhindern.

Alternativ, gegebenenfalls auch zusätzlich, kann direkt auf die Katalysatorschüttung 14 oder auf die Keramikkugeln ein Lichtgitter mit darunter angebrachtem Maschen-Drahtgewebe aufgelegt werden. Diese dienen zum einen als Niederhalter der Katalysatorschüttung, zum anderen kann durch die Verwendung von Lichtgittern zusätzlich noch eine Gasströmungs-Gleichrichtung erzielt werden (das Gas kann nicht quer in die Katalysatorschüttung einströmen, sondern nur senkrecht durch das Lichtgitter).

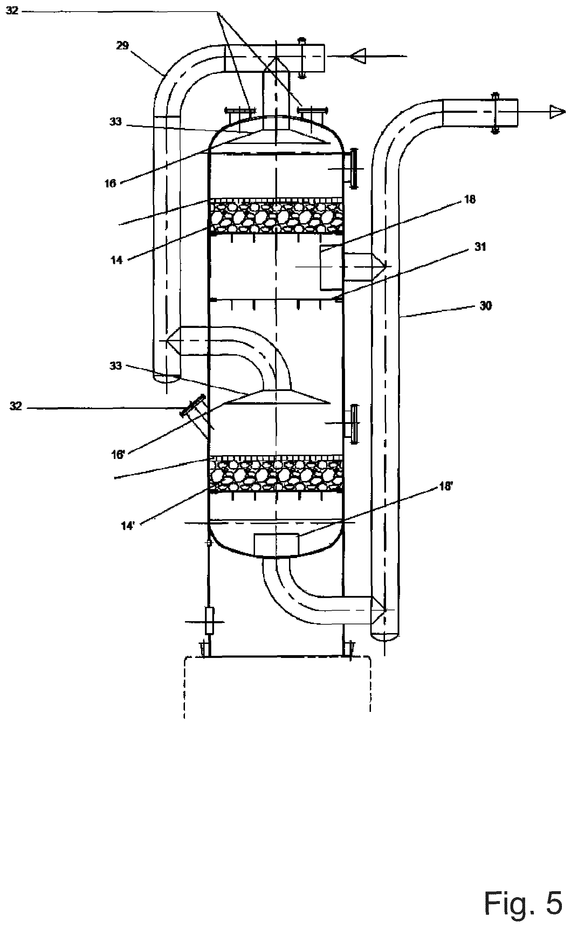

Figur 5 zeigt eine Ausführung eines Reaktorbehälters 10 mit einem ersten Katalysatorbett 14 und einem zweiten Katalysatorbett 14'. Der Reaktorbehälter 10 ist zweiflutig ausgestaltet. Durch einen ersten Einlass 16 kann ein Teil des Gasstroms das erste Katalysatorbett 14 durchströmen und verlässt den Reaktorbehälter 10 durch einen ersten Auslass 18. Durch einen zweiten Auslass 18 kann ein weiterer Teil des Gasstroms das zweite Katalysatorbett 14' durchströmen und verlässt den Reaktorbehälter 10 durch einen zweiten Auslass 18'. Der erste Einlass 16 und der zweite Einlass 16' sind miteinander über eine Einlasssammelleitung 29 strömungstechnisch verbunden. Der Gasstrom teilt sich innerhalb der Einlasssammelleitung 29 auf, sodass sowohl das erste Katalysatorbett 14, als auch das zweite Katalysatorbett 14' durchströmt werden.

Der erste Auslass 18 und der zweite Auslass 18' sind mittels einer Auslasssammelleitung 30 strömungstechnisch miteinander verbunden. Der Gasstrom, der durch das erste Katalysatorbett geleitet wird, und der Gasstrom, der durch das zweite Katalysatorbett geleitet wird, werden über die Auslasssammelleitung 30 wieder zusammengeführt. Zusätzlich werden die beiden Katalysatorbetten 14, 14' mittels eines Trennelements 31, in Form einer Trennplatte, strömungstechnisch voneinander getrennt. Auf diese Weise können Bypassströmungen vermieden werden. Die beiden Katalysatorbetten 14, 14' werden folglich parallel geschaltet, wobei jeweils ein Teil des Gasstroms durch jeweils durch das erste Katalysatorbett 14 bzw. das zweite Katalysatorbett 14' geleitet wird.

Der Zugang zur Montage und die Befüllung der Katalysatorbetten 14, 14' mit Katalysator erfolgt über Mannlöcher und bzw. in diesem Ausführungsbeispiel über Füllstutzen 32. Über die Füllstutzen 32 kann verbrauchter Katalysator ebenfalls ausgetauscht, insbesondere abgesaugt werden. Der Gasstrom wird über Gasverteiler 33 gleichmäßig im Reaktorbehälter 10 verteilt.

### Bezugszeichenliste

- 10: Reaktorbehälter
- 11: Wandung des Reaktorbehälters, Reaktorwandung
- 12: Konsolen, Tragelemente
- 13: Wangen
- 14: (Erstes) Katalysatorbett
- 14': Zweites Katalysatorbett
- 15: Achse
- 16: Erster Einlass
- 16': Zweiter Einlass
- 17: Ablenkplatte
- 18: Erster Auslass
- 18': Zweiter Auslass
- 19: Aussteifungsrippen
- 20: Siebblech
- 21: Randspalt
- 22: Tragelement
- 23: Deckblech
- 24: Stützelemente
- 25: Doppelpfeil
- 26: Hülse, Abstandselement
- 27: Schlitz, Langloch
- 28: Drahtgewebe
- 29: Einlasssammelleitung
- 30: Auslasssammelleitung
- 31: Trennelement
- 32: Füllstutzen
- 33: Gasverteiler

## Patentansprüche

1. Reaktor mit wenigstens einem Katalysatorbett (14) für die katalytische Behandlung eines Gasstroms, insbesondere Reaktor für die katalytische Behandlung des Restgases zur Reduzierung des Gehalts an Stickstoffoxiden in Verfahren zur Herstellung von Salpetersäure nach dem Ostwald-Verfahren, wobei das Katalysatorbett (14) sich über den Querschnitt des Reaktors erstreckt und das Katalysatorbett von dem zu behandelnden Gas axial durchströmt wird, wobei der Reaktor eine Tragstruktur für das Katalysatorbett aufweist, die mindestens teilweise in dem Reaktor schwimmend gelagert ist, wobei die Tragstruktur ein Siebelement (20) umfasst, sowie radial außenseitig fest mit der Reaktorwandung verbundene Tragelemente (12) unterhalb des Siebelements, wobei das Siebelement (20) eine Auflageebene für das Katalysatorbett (14) schafft und wobei das Siebelement (20) radial außenseitig mit Abstand vor der Reaktorwandung (11) endet, **dadurch gekennzeichnet, dass** die Tragstruktur neben fest mit der Reaktorwandung (11) verbundenen Tragelementen (12) Stützelemente (24) für das wenigstens eine Siebelement (20) umfasst, welche im Reaktor ebenfalls schwimmend gelagert sind.

2. Reaktor nach Anspruch 1, **dadurch gekennzeichnet, dass** die fest mit der Reaktorwandung (11) verbundenen Tragelemente (12) Konsolen umfassen, auf denen die Stützelemente (24) verschieblich aufliegen, wobei auf den verschieblichen Stützelementen (24) wiederum das wenigstens eine Siebelement (20) aufliegt.

3. Reaktor nach Anspruch 2, **dadurch gekennzeichnet, dass** dieser mehrere in Längsrichtung oder in Umfangsrichtung des Reaktors gesehen jeweils voneinander beabstandete Konsolen (12) aufweist, auf denen jeweils Stützelemente (24) verschieblich aufliegen, wobei ein oder mehrere Siebelemente (20) auf einem oder mehreren Stützelementen (24) aufliegen.

4. Reaktor nach einem der Ansprüche 2 oder 3, **dadurch gekennzeichnet, dass** die Stützelemente (24) auf den Konsolen (12) mit zwei Freiheitsgraden der Bewegung in zwei zueinander etwa senkrecht ausgerichteten Richtungen verschieblich aufliegen.

5. Reaktor nach Anspruch 4, **dadurch gekennzeichnet, dass** die Stützelemente (24) in Längsrichtung der Konsolen (12) verschieblich auf den Konsolen aufliegen und in Querrichtung der Konsolen verschieblich auf den Konsolen aufliegen.

6. Reaktor nach einem der Ansprüche 2 bis 5, **dadurch gekennzeichnet, dass** die Konsolen (12) in ihrer Querrichtung breiter ausgebildet sind als die Stützelemente (24).

7. Reaktor nach einem der Ansprüche 2 bis 6, **dadurch gekennzeichnet, dass** an den Konsolen (12) Wangen (13) so angebracht sind, dass sie die verschiebliche Bewegung der Stützelemente (24) relativ zu den Konsolen (12) in Querrichtung der Konsolen begrenzen.

8. Reaktor nach einem der Ansprüche 2 bis 7, **dadurch gekennzeichnet, dass** die Stützelemente (24) mit Abstand vor der Reaktorwandung (11) enden, so dass ein Spalt verbleibt und keine Spannungen entstehen, wenn die Stützelemente sich in ihrer Längsrichtung, also in Richtung auf die Reaktorwandung zu, ausdehnen.

9. Reaktor nach einem der Ansprüche 7 oder 8, **dadurch gekennzeichnet, dass** jeweils zwei voneinander beabstandete parallele Wangen (13) beidseitig an den Konsolen (12) angebracht sind, wobei die beiden Wangen (13) über ein sich in Querrichtung erstreckendes Abstandselement (26) miteinander verbunden sind.

10. Reaktor nach Anspruch 9, **dadurch gekennzeichnet, dass** dieser als Abstandselement (26) eine kraftschlüssig mit den Wangen (13) verbundene Hülse aufweist.

11. Reaktor nach einem der Ansprüche 9 oder 10, **dadurch gekennzeichnet, dass** die Stützelemente (24) einen Schlitz aufweisen und das Abstandselement (26) sich in Querrichtung zu dem Stützelement (24) durch den Schlitz hindurch erstreckt.

12. Reaktor nach einem der Ansprüche 2 bis 11, **dadurch gekennzeichnet, dass** die Tragstruktur zusätzlich zu den Konsolen (12) wenigstens ein an der Reaktorwandung umlaufend angeordnetes und mit dieser verbundenes weiteres Tragelement (22) umfasst, auf dem das wenigstens eine Siebelement (20) mit Abstand zur Reaktorwandung (11) schwimmend aufliegt, so dass ein Randspalt (21) zwischen Siebelement und Reaktorwandung verbleibt.

13. Reaktor nach einem der Ansprüche 1 bis 12, **dadurch gekennzeichnet, dass** dieser wenigstens ein umlaufendes Deckblech (23) aufweist, welches einen Randspalt (21) zwischen dem Siebelement (20) und der Reaktorwandung (11) überdeckt.

14. Reaktor nach Anspruch 13, **dadurch gekennzeichnet, dass** der der Reaktorwandung (11) zugewandte randseitige Bereich des Siebelements (20) zwischen dem umlaufenden weiteren Tragelement (22) und dem Deckblech (23) eingefasst ist.

15. Reaktor nach einem der Ansprüche 1 bis 14, **dadurch gekennzeichnet, dass** dieser als liegender Reaktor (10) ausgebildet ist, bei dem der Gasstrom, insbesondere das Restgas, das Katalysatorbett (14) senkrecht oder quer zur Behälterachse (15) durchströmt oder dieser als stehender Reaktor ausgebildet ist, bei dem der Gasstrom, insbesondere das Restgas, das Katalysatorbett in Achsrichtung durchströmt.

16. Reaktor nach einem der Ansprüche 1 bis 15, **dadurch gekennzeichnet, dass** oberhalb oder unterhalb des Siebelements (20) in dem Katalysatorbett (14) vertikale Aussteifungsrippen (19) angeordnet sind, die vertikal ausgerichtet sind, sich entlang des Siebelements erstrecken und zueinander beabstandet sind.

17. Reaktor nach einem der Ansprüche 1 bis 16, **dadurch gekennzeichnet, dass** dieser mindestens ein erstes Katalysatorbett (14) und ein zweites Katalysatorbett (14') aufweist, dass die Katalysatorbetten (14, 14') voneinander beabstandet sind, dass mindestens ein Teil des Gasstroms über einen ersten Einlass (16) zum ersten Katalysatorbett (14) strömt und dass mindestens ein Teil des Gasstroms über einen zweiten Einlass (16') zum zweiten Katalysatorbett (14') strömt.

18. Reaktor nach Anspruch 17, **dadurch gekennzeichnet, dass** der erste Einlass (16) und der zweite Einlass (16') über eine Einlasssammelleitung (29) strömungstechnisch miteinander verbunden sind.

19. Reaktor nach Anspruch 17 oder 18, **dadurch gekennzeichnet, dass** mindestens ein Teil des Gasstroms über einen ersten Auslass (18) im Bereich des ersten Katalysatorbettes (14) aus dem Reaktor ausleitbar ist und dass mindestens ein Teil des Gasstroms über einen zweiten Auslass (18') im Bereich des zweiten Katalysatorbettes aus dem Reaktor ausleitbar ist.

20. Reaktor nach Anspruch 19, **dadurch gekennzeichnet, dass** der erste Auslass (18) und der zweite Auslass (18') über eine Auslasssammelleitung (30) strömungstechnisch miteinander verbunden sind.

21. Reaktor nach einem der Ansprüche 17 bis 20, **dadurch gekennzeichnet, dass** das erste Katalysatorbett (14) und das zweite Katalysatorbett (14') durch ein Trennelement (31) strömungstechnisch voneinander getrennt sind.

## Claims

1. A reactor having at least one catalyst bed (14) for the catalytic treatment of a gas stream, in particular a reactor for the catalytic treatment of residual gas for reducing the content of nitrogen oxides in processes for producing nitric acid by the Ostwald process, wherein the catalyst bed (14) extends over the cross section of the reactor and the catalyst bed is axially flown through by the gas to be treated, wherein the reactor comprises a carrier structure for the catalyst bed which is at least partly floatingly mounted in the reactor, wherein the carrier structure comprises a sieve element (20) and, radially outwardly, carrier elements (12) fixedly joined to the reactor wall below the sieve element, wherein the sieve element (20) provides a resting surface for the catalyst bed (14) and wherein the sieve element (20) terminates, radially outwardly, at a distance from the reactor wall (11), **characterized in that** in addition to carrier elements (12) fixedly joined to the reactor wall (11), the carrier structure also comprises support elements (24) for the at least one sieve element (20) which are likewise floatingly mounted in the reactor.

2. The reactor as claimed in claim 1, **characterized in that** the carrier elements (12) fixedly joined to the reactor wall (11) comprise brackets on which the support elements (24) displaceably rest, wherein the at least one sieve element (20) in turn rests on the displaceable support elements (24).

3. The reactor as claimed in claim 2, **characterized in** having two or more brackets (12) which are respectively spaced apart from one another in the longitudinal direction or in the circumferential direction of the reactor, on which support elements (24) displaceably rest in each case, wherein one or more sieve elements (20) rest on one or more support elements (24).

4. The reactor as claimed in claim 2 or 3, **characterized in that** the support elements (24) displaceably rest on the brackets (12) with two degrees of freedom of motion in two directions approximately perpendicular to one another.

5. The reactor as claimed in claim 4, **characterized in that** the support elements (24) rest on the brackets such that they are displaceable in the longitudinal direction of the brackets (12) and in the transverse direction of the brackets.

6. The reactor as claimed in any of claims 2 to 5, **characterized in that** the brackets (12) are wider in their transverse direction than the support elements (24).

7. The reactor as claimed in any of claims 2 to 6, **characterized in that** cheeks (13) are mounted to the brackets (12) such that they limit the displaceable motion of the support elements (24) relative to the brackets (12) in the transverse direction of the brackets.

8. The reactor as claimed in any of claims 2 to 7, **characterized in that** the support elements (24) terminate at a distance from the reactor wall (11) so that a gap remains and no stresses arise when the support elements expand in their longitudinal direction, namely toward the reactor wall.

9. The reactor as claimed in either of claims 7 or 8, **characterized in that** in each case two parallel cheeks (13) spaced apart from one another are mounted on both sides of the brackets (12), wherein the two cheeks (13) are joined to one another via a spacer element (26) extending in the transverse direction.

10. The reactor as claimed in claim 9, **characterized in** having a sleeve which is force-locked connected to the cheeks (13) as the spacer element (26).

11. The reactor as claimed in either of claims 9 or 10, **characterized in that** the support elements (24) comprise a slot and the spacer element (26) extends through the slot transverse to the support element (24).

12. The reactor as claimed in any of claims 2 to 11 **characterized in that** in addition to the brackets (12), the carrier structure also comprises at least one further carrier element (22) circumferentially arranged at the reactor wall and joined thereto, on which the at least one sieve element (20) floatingly rests at a distance from the reactor wall (11) such that an edge gap (21) between the sieve element and the reactor wall remains.

13. The reactor as claimed in any of claims 1 to 12, **characterized in** having at least one circumferential cover plate (23) which covers an edge gap (21) between the sieve element (20) and the reactor wall (11).

14. The reactor as claimed in claim 13, **characterized in that** the edge region of the sieve element (20) facing the reactor wall (11) is enclosed by the circumferential further carrier element (22) and the cover plate (23).

15. The reactor as claimed in any of claims 1 to 14, **characterized in that** said reactor is designed in the form of a horizontal reactor (10) where the gas stream, in particular the residual gas, flows through the catalyst bed (14) perpendicularly or transversely to the vessel axis (15) or in the form of a vertical reactor where the gas stream, in particular the residual gas, flows through the catalyst bed in the axis direction.

16. The reactor as claimed in any of claims 1 to 15, **characterized in that** above or below the sieve element (20) in the catalyst bed (14), vertical stiffening ribs (19) are arranged which are vertically oriented extending along the sieve element and being spaced apart from one another.

17. The reactor as claimed in any of claims 1 to 16, **characterized in** having at least a first catalyst bed (14) and a second catalyst bed (14'), **in that** the catalyst beds (14, 14') are spaced apart from one another, **in that** at least a portion of the gas stream flows via a first inlet (16) to the first catalyst bed (14) and **in that** at least a portion of the gas stream flows via a second inlet (16') to the second catalyst bed (14').

18. The reactor as claimed in claim 17, **characterized in that** the first inlet (16) and the second inlet (16') are fluidically connected to one another via an inlet manifold (29).

19. The reactor as claimed in claim 17 or 18, **characterized in that** at least a portion of the gas stream is dischargeable from the reactor via a first outlet (18) in the region of the first catalyst bed (14) and **in that** at least a portion of the gas stream is dischargeable from the reactor via a second outlet (18') in the region of the second catalyst bed.

20. The reactor as claimed in claim 19, **characterized in that** the first outlet (18) and the second outlet (18') are fluidically connected to one another via an outlet manifold (30).

21. The reactor as claimed in any of claims 17 to 20, **characterized in that** the first catalyst bed (14) and the second catalyst bed (14') are fluidically separated from one another by a separating element (31).

## Revendications

1. Réacteur avec au moins un lit de catalyseur (14) pour le traitement catalytique d'un flux de gaz, en particulier réacteur pour le traitement catalytique du gaz résiduel pour la réduction de la teneur en oxydes d'azote dans des procédés de production d'acide nitrique selon le procédé d'Ostwald, le lit de catalyseur (14) s'étendant sur la section transversale du réacteur et le lit de catalyseur étant traversé axialement par le gaz à traiter, le réacteur présentant une structure de support pour le lit de catalyseur, qui est logée au moins partiellement de manière flottante dans le réacteur, la structure de support comprenant un élément de tamisage (20), ainsi que des éléments de support (12) reliés radialement à l'extérieur de manière fixe à la paroi du réacteur, au-dessous de l'élément de tamisage, l'élément de tamisage (20) créant un plan d'appui pour le lit de catalyseur (14) et l'élément de tamisage (20) se terminant radialement à l'extérieur à distance devant la paroi du réacteur (11), **caractérisé en ce que** la structure de support comprend, outre des éléments de support (12) reliés de manière fixe à la paroi du réacteur (11), des éléments de soutien (24) pour le au moins un élément de tamisage (20), qui sont également montés de manière flottante dans le réacteur.

2. Réacteur selon la revendication 1, **caractérisé en ce que** les éléments de support (12) reliés de manière fixe à la paroi (11) du réacteur comprennent des consoles sur lesquelles les éléments de support (24) reposent de manière mobile, l'au moins un élément de tamisage (20) reposant à son tour sur les éléments de support mobiles (24).

3. Réacteur selon la revendication 2, **caractérisé en ce que** celui-ci présente plusieurs consoles (12) espacées les unes des autres, vues dans la direction longitudinale ou dans la direction périphérique du réacteur, sur lesquelles reposent respectivement des éléments d'appui (24) de manière à pouvoir coulisser, un ou plusieurs éléments de tamisage (20) reposant sur un ou plusieurs éléments d'appui (24).

4. Réacteur selon l'une des revendications 2 ou 3, **caractérisé en ce que** les éléments de support (24) reposent de manière coulissante sur les consoles (12) avec deux degrés de liberté de mouvement dans deux directions approximativement perpendiculaires entre elles.

5. Réacteur selon la revendication 4, **caractérisé en ce que** les éléments de support (24) reposent sur les consoles de manière à pouvoir coulisser dans le sens longitudinal des consoles (12) et reposent sur les consoles de manière à pouvoir coulisser dans le sens transversal des consoles.

6. Réacteur selon l'une des revendications 2 à 5, **caractérisé en ce que** les consoles (12) sont plus larges dans leur direction transversale que les éléments de support (24).

7. Réacteur selon l'une des revendications 2 à 6, **caractérisé en ce que** des joues (13) sont montées sur les consoles (12) de manière à limiter le mouvement de translation des éléments de support (24) par rapport aux consoles (12) dans la direction transversale des consoles.

8. Réacteur selon l'une quelconque des revendications 2 à 7, **caractérisé en ce que** les éléments de support (24) se terminent à une certaine distance en avant de la paroi (11) du réacteur, de manière à laisser un espace et à ne pas créer de contraintes lorsque les éléments de support se dilatent dans leur direction longitudinale, c'est-à-dire en direction de la paroi du réacteur.

9. Réacteur selon l'une des revendications 7 ou 8, **caractérisé en ce que** deux joues parallèles (13) espacées l'une de l'autre sont montées respectivement de part et d'autre des consoles (12), les deux joues (13) étant reliées entre elles par un élément d'écartement (26) s'étendant dans la direction transversale.

10. Réacteur selon la revendication 9, **caractérisé en ce que** celui-ci présente comme élément d'écartement (26) un manchon relié par adhérence aux joues (13).

11. Réacteur selon l'une des revendications 9 ou 10, **caractérisé en ce que** les éléments de support (24) comportent une fente et **en ce que** l'élément d'espacement (26) s'étend transversalement à l'élément de support (24) à travers la fente.

12. Réacteur selon l'une des revendications 2 à 11, **caractérisé en ce que** la structure porteuse comprend, en plus des consoles (12), au moins un autre élément porteur (22) disposé sur le pourtour de la paroi du réacteur et relié à celle-ci, sur lequel repose de manière flottante le au moins un élément de tamisage (20) à distance de la paroi (11) du réacteur, de sorte qu'il reste un interstice marginal (21) entre l'élément de tamisage et la paroi du réacteur.

13. Réacteur selon l'une des revendications 1 à 12, **caractérisé en ce qu**'il comporte au moins une tôle de couverture périphérique (23) qui recouvre un interstice marginal (21) entre l'élément de tamisage (20) et la paroi (11) du réacteur.

14. Réacteur selon la revendication 13, **caractérisé en ce que** la zone marginale de l'élément de tamisage (20) orientée vers la paroi du réacteur (11) est enserrée entre l'autre élément porteur (22) périphérique et la tôle de couverture (23).

15. Réacteur selon l'une des revendications 1 à 14, **caractérisé en ce qu'**il est réalisé sous forme de réacteur couché (10), dans lequel le flux de gaz, en particulier le gaz résiduel, traverse le lit de catalyseur (14) perpendiculairement ou transversalement à l'axe (15) du récipient, ou **en ce qu'**il est réalisé sous forme de réacteur debout, dans lequel le flux de gaz, en particulier le gaz résiduel, traverse le lit de catalyseur dans la direction axiale.

16. Réacteur selon l'une quelconque des revendications 1 à 15, **caractérisé en ce qu'**au-dessus ou en dessous de l'élément de tamisage (20), dans le lit de catalyseur (14), sont disposées des nervures de raidissement verticales (19) qui sont orientées verticalement, s'étendent le long de l'élément de tamisage et sont espacées les unes des autres.

17. Réacteur selon l'une des revendications 1 à 16, **caractérisé en ce qu'**il comprend au moins un premier lit catalytique (14) et un deuxième lit catalytique (14'), **en ce que** les lits catalytiques (14, 14') sont espacés l'un de l'autre, **en ce qu'**au moins une partie du flux gazeux s'écoule vers le premier lit catalytique (14) via une première entrée (16) et **en ce qu'**au moins une partie du flux gazeux s'écoule vers le deuxième lit catalytique (14') via une deuxième entrée (16').

18. Réacteur selon la revendication 17, **caractérisé en ce que** la première entrée (16) et la deuxième entrée (16') sont reliées fluidiquement entre elles par un collecteur d'entrée (29).

19. Réacteur selon la revendication 17 ou 18, **caractérisé en ce qu'**au moins une partie du flux de gaz peut être évacuée du réacteur par une première sortie (18) dans la zone du premier lit de catalyseur (14) et **en ce qu'**au moins une partie du flux de gaz peut être évacuée du réacteur par une deuxième sortie (18') dans la zone du deuxième lit de catalyseur.

20. Réacteur selon la revendication 19, **caractérisé en ce que** la première sortie (18) et la deuxième sortie (18') sont reliées fluidiquement entre elles par un collecteur de sortie (30).

21. Réacteur selon l'une quelconque des revendications 17 à 20, **caractérisé en ce que** le premier lit de catalyseur (14) et le deuxième lit de catalyseur (14') sont séparés fluidiquement l'un de l'autre par un élément de séparation (31).
